# EUROPEAN PATENT APPLICATION

(11) **EP 4 682 812 A1**
(43) Date of publication of application: **21.01.2026**
(21) Application number: 24775141.5
(22) Date of filing: 15.03.2024
(51) Int. Cl.: G06Q 50/18, G06F 16/9032, G06N 20/00, G06N 3/092, G06Q 30/06, G06F 21/10, G06F 21/64, H04L 67/1097, G06F 40/30

(54) **METHOD FOR SEARCHING TARGET IPS FOR TARGET ITEM AND COMPUTER DEVICE PERFORMING SAME**

(30) Priority: 17.03.2023 KR 20230035496; 06.04.2023 KR 20230045101
(71) Applicant: Chun, Jong Yoon, Yeoju-si, Gyeonggi-do 12601 (KR)
(72) Inventor: Chun, Jong Yoon, Yeoju-si, Gyeonggi-do 12601 (KR)
(74) Representative: Viering, Jentschura & Partner mbB Patent- und Rechtsanwälte
(86) International application number: PCT/KR2024/003309
(87) International publication number: WO 2024/196093

(57) **Abstract**

A method for searching target IPs for a target item according to one embodiment is performed by a computer device. The method for searching target IPs for a target item includes the steps of: acquiring a query designating the target item; and on the basis of the query, searching a plurality of target IPs for a use in at least one selected from the group consisting of research on or the development and production of the target item. Here, the plurality of target IPs include IPs for at least two elements among elements of the target item and/or IPs for a technology combining the at least two elements for a use in the performance, operation, production, and utilization of the target item.

## Description

### TECHNICAL FIELD

The present invention relates to a method for searching target IPs for a target item and a computer device performing the same.

### BACKGROUND ART

In the year 2021, in IP5 including Korea (Korea, China, United States, Europe, Japan), a total of about 1.4 million patents were registered. In addition, during the five years immediately preceding 2021, about 1 million patents were registered every year.

However, among such numerous registered patents, registered patents that a patentee actually uses for research, development, or production of products are only a part.

The reason that only a part of patents, not all registered patents, are used by the patentee (or a licensee) may be considered to originate from an 'insurance characteristic' of patents. As is well known, insurance is a means of preparing in advance for an event that has not yet occurred but is predicted to occur. Like such insurance, a patent is a means for protecting a technology that is predicted to be used in the future but is not immediately used for research, development, or production by the patentee himself or herself, or for preoccupying a technology that is predicted to be used by a competitor and thereby preventing the implementation of the competitor.

However, not all matters coincide with predictions. Unlike the time when the patent was secured, in research, development, or production by the patentee himself or herself, a technology different from that protected by the patent may be used. In addition, even if patent registration is obtained in order to prevent implementation by a competitor, the competitor may implement the patent by intentionally or unintentionally avoiding the registered patent. In such a case, it cannot be considered that the registered patent is used as intended by the patentee of the patent.

Accordingly, a measure is required for enabling the registered patent to be properly used. One of such measures is to transfer the registered patent to a potential licensee or to grant a license for such a registered patent to the potential licensee.

In this case, in transferring the registered patent or granting a license for the same, various procedures are required. For example, a lawyer or a patent attorney may be appointed in order to represent a license contract. In addition, in order to be used as basic data for pricing a license fee, patent valuation may be performed, and in this process, an expert such as a patent attorney or an accountant may be appointed.

That is, in transfer of a registered patent or in granting a license for the same, procedures for appointing various experts are required. In this case, a considerable time and cost may be required for performance of tasks by these experts.

Accordingly, transferring or receiving a registered patent, or granting or receiving a license for a registered patent, may be to some extent a burden to ordinary people.

### DETAILED DESCRIPTION OF INVENTION

### TECHNICAL PROBLEMS

According to one embodiment, an object to be solved includes providing IP regarding technology used for research on, development, or production of a target item among various types of IP including patents by searching with an artificial intelligence model.

In addition, providing a platform in which transfer or license grant of the thus searched IP may be easily performed, that is, a platform in which transaction or contract of these IP may be easily achieved, may be included in such an object.

In addition, enabling information generated through such searching, that is, technology necessary for research on, development, or production of a target item and IP information on such technology, to be packaged and thereby traded may also be included in the above-mentioned object.

However, such an object is not to be limitedly interpreted as the above-mentioned.

### TECHNICAL SOLUTION

A method for searching target IP for a target item, performed by a computer device, according to a first embodiment includes: acquiring a query designating the target item; and searching a plurality of target IPs for a use in at least one of research on, development, and production of the target item, based on the query, wherein the plurality of target IPs include IPs for each of at least two elements among the elements of the target item and IPs for combination technologies of the at least two elements for a use in performance, operation, production, and utilization of the target item.

Further, the searching may include: searching the elements of the target item based on the query; searching the target IP in which at least one of the searched elements is described; searching the combination technologies by using a technology for combining the elements as the query; and searching the target IP in which the searched combination technologies are described.

Further, in the searching, a patent in which at least one of the elements of the target item or the combination technologies of the elements is described in a patent claim may be searched as the target IP.

Further, the method for searching the target IP for the target item may further include: selecting a patent in which an additional element not included in the target item is described in a patent claim, or a combination technology different from the combination technologies of the elements is described, wherein in the searching, the plurality of target IPs may be controlled to be exclusive of the selected patent.

Further, at least one of the additional element or the different combination technology may be determined based on input from a potential licensee of the target IP.

Further, the method for searching the target IP for the target item may further include: selecting a patent in which an additional element not included in the target item is described in a patent claim, or a combination technology different from the combination technologies of the elements is described; presenting the selected patent as reference technology in research on or development of the target item to a potential licensee of the target IP; and when a search request for the reference technology is received from the potential licensee, searching IP including at least one of the additional element or the different combination technology.

Further, the method for searching the target IP for the target item may further include: in the searching, acquiring information on IP searchable as the target IP and IP to be excluded in search results, and the plurality of target IPs may be searched among IPs information searchable as the target IP.

Further, the query may include wording designating performance improvement of the target item, and in the searching, a patent including at least one of the wording or semantic synonyms of the wording in a section in which an effect of invention is described may be searched as the target IP.

Further, the query may include quantitative index wording indicating performance of the target item, and in the searching, a patent in which the performance of the target item extracted from a section in which an effect of invention is described satisfies a range limited by the quantitative index wording may be searched as the target IP.

Further, in the searching, even when the performance of the target item extracted from the section in which the effect of invention is described deviates from the range limited by the quantitative index wording, a patent in which the performance of the target item is described in a detailed description of invention as not being limitedly interpreted as described in the detailed description of invention or the effect of invention may be searched as the target IP.

Further, the target IP may include at least one of a registered patent, a published patent, a registered utility model, a published utility model, a registered trademark, a published trademark, a registered design, a published design, a copyright, software, or know-how.

Further, in the searching, a language model that receives the query may search for and provide the plurality of target IPs.

Further, the language model may be trained by fine-tuning a pre-trained model based on at least one of a paper, a published patent document, or a published utility model document.

Further, in the fine-tuning, reinforcement learning by human feedback (RLHF) may be performed.

Further, in the reinforcement learning by human feedback, a training process using a dialogue set generated by humans and a training process using a ranking selected by humans with respect to a plurality of outputs generated by the language model may be performed.

Further, the method for searching the target IP for the target item may further include: concluding a contract in which agreed matters between an owner of the target IP and a potential licensee are reflected, while setting a legal right of use of the searched target IP as a subject matter of the contract.

Further, the contract may include a transfer contract or a license contract for the searched target IP.

Further, the agreed matters may include at least one of a payment amount for assignment, a license fee, a payment method of license fee, a condition of termination of license, a license territory, a license field, a technical assistance and patent claim numbers in which the legal right of use is to be granted.

Further, the agreed matters may be input by the owner of the target IP.

Further, based on statistics or artificial intelligence, at least one of a maximum amount, a minimum amount, or an average amount of the assignment amount or the license fee may be provided as reference information to the owner of the target IP.

Further, the method for searching the target IP for the target item may further include: recommending, by a pre-trained mediator recommendation model, a mediator that mediates requirement matters between the owner of the target IP and the potential licensee, and the agreed matters may be mediated by the mediator recommended by the mediator recommendation model.

Further, the mediator recommendation model may recommend the mediator based on at least one of a field of expertise of the mediator, a mediation success rate of each mediator by technical field, or a past agreement tendency of each of the owner of the target IP and the potential licensee.

Further, the method for searching the target IP for the target item may further include: recommending, by a pre-trained mediation plan recommendation model, a mediation plan for mediating requirement matters between the owner of the target IP and the potential licensee, and the agreed matters comprise the mediation plan recommended by the mediation plan recommendation model.

Further, the method for searching the target IP for the target item may further include: acquiring request matters from each of an owner of the target IP and a potential licensee; and generating a term sheet in which the acquired request matters are collectively described and providing the term sheet to each of the owner of the target IP and the potential licensee.

Further, the term sheet may indicate in a distinguishable manner, among the acquired request matters, matters on which mutual opinions have been agreed upon and matters on which mutual opinions have not been agreed upon.

Further, the method for searching the target IP for the target item may further include: reflecting contents included in the concluded contract on a predetermined blockchain.

Further, the method for searching the target IP for the target item may further include: acquiring relative importance information for each of elements of the target item and the combination technologies; and determining a license fee limit for each of the elements and the combination technologies in a manner dependent on the acquired relative importance, and the plurality of target IPs may be determined based at least partially on the determined license fee limit and a license fee predetermined by an owner of the IP.

Further, in the searching, two or more candidate IPs may be searched for each of the elements of the target item and the combination technologies, the method may further includes: ranking the two or more candidate IPs searched for each of the elements of the target item and the combination technologies, and the ranking for the candidate IPs may be made based on at least one of the number of IP held by an owner of corresponding IP in the same technology theme, the number of citations of the corresponding IP, thepresence/absence or number of papers related to the corresponding IP, or the presence/absence or number of preset licenses for the corresponding IP.

Further, the method for searching the target IP for the target item may further include: generating a business package file including information on each of the elements of the target item, the combination technologies of the elements, IP for the elements of the target item, and IP for the combination technologies of the elements; and controlling to allow the generated business package file to be tradable in a business item trading platform.

Further, the method for searching the target IP for the target item may further include: reflecting the business package file on a predetermined blockchain.

Further, the blockchain may be a private blockchain accessible only to a subject who has purchased the business package file.

Further, the blockchain comprises contract contents for the trade of the business package file.

Further, the concluding of the contract may include at least one of the following steps: receiving an electronic signature from each of the owner of the target IP and the potential licensee; and receiving notarization for the concluded contract.

A computer program according to a second embodiment may be stored in a computer-readable recording medium and may be configured to perform each step described above.

A computer-readable recording medium according to a third embodiment may store a computer program, and the computer program may be configured to perform each step described above.

A computer device according to a fourth embodiment may include: a memory storing at least one instruction; and a processor, wherein, as the at least one instruction is executed by the processor, a query designating a target item may be acquired, based on the query, a plurality of target IPs for a use in at least one of research on, development, and production of the target item are searched, and the plurality of target IPs may include IPs for each of at least two elements among the elements of the target item and IPs for combination technologies of the at least two elements for a use in performance, operation, production, and utilization of the target item.

Further, in the searching of the plurality of target IPs, a patent in which at least one of the elements of the target item or the combination technologies of the elements is described in a patent claim may be searched as the target IP.

Further, as the at least one instruction is executed by the processor, a patent in which an additional element not included in the target item is described in a patent claim or a combination technology different from the combination technologies of the elements is described may be selected, and in the searching of the plurality of target IPs, the plurality of target IPs may be controlled to be exclusive of the selected patent.

Further, at least one of the additional element or the different combination technology may be determined based on input from a potential licensee of the target IP.

Further, a patent in which an additional element not included in the target item is described in a patent claim, or a combination technology different from the combination technologies of the elements is described, may be selected, the selected patent may be presented, as a reference technology in research on or development of the target item, to a potential licensee of the target IP, and when a search request for the reference technology is received from the potential licensee, an IP including at least one of the additional element or the different combination technology, may be searched.

Further, as the at least one instruction is executed by the processor, information on IP searchable as the target IP and IP to be excluded in search results may be acquired, and the plurality of target IPs may be searched from among the searchable IP while not being searched from among the IP to be excluded in the search results.

Further, the query may include wording designating performance improvement of the target item, and in the searching, a patent in which at least one of the wording or semantic synonyms of the wording is included in a section in which an effect of invention is described may be searched as the target IP.

Further, the query may include quantitative index wording indicating performance of the target item, and in the searching, a patent in which the performance of the target item extracted from a section in which an effect of invention is described satisfies a range limited by the quantitative index wording may be searched as the target IP.

Further, in the searching, even when the performance of the target item extracted from the section in which the effect of invention is described deviates from the range limited by the quantitative index wording, a patent in which the performance of the target item is described in a detailed description of invention as not being limitedly interpreted as described in the detailed description of invention or the effect of invention may be searched as the target IP.

Further, the target IP may include at least one of a registered patent, a published patent, a registered utility model, a published utility model, a registered trademark, a published trademark, a registered design, a published design, a copyright, software, or know-how.

Further, in the searching, a language model receiving the query may search for and provide the plurality of target IPs.

Further, the language model may be trained by fine-tuning a pre-trained model based on at least one of a paper, a published patent document, or a published utility model document.

Further, in the fine-tuning, reinforcement learning by human feedback (RLHF) may be performed.

Further, in the reinforcement learning by human feedback, a training process using a dialogue set generated by humans and a training process using a ranking selected by humans with respect to a plurality of outputs generated by the language model may be performed.

Further, in the searching, the elements of the target item may be searched based on the query, a target IP in which at least one of the searched elements is described may be searched, the combination technologies may be searched by using a technology for combining the elements as the query, and a target IP in which the searched combination technologies are described may be searched.

Further, when the at least one instruction is executed by the processor, a contract in which agreed matters between an owner of the target IP and a potential licensee are reflected while setting a legal right of use of the searched target IP as a subject matter of the contract, may be concluded.

Further, the contract may include a transfer contract or a license contract for the searched target IP.

Further, the agreed matters may include at least one of a payment amount for assignment, a license fee, a payment method of license fee, a condition of termination of license, a license territory, a license field of license, a technical assistance and patent claim numbers in which the legal right of use is to be granted.

Further, the agreed matters may be input by the owner of the target IP.

Further, based on statistics or artificial intelligence, at least one of a maximum amount, a minimum amount, or an average amount of the assignment amount or the license fee may be provided as reference information to the owner of the target IP.

Further, as the at least one instruction is executed by the processor, a mediator that mediates requirement matters between the owner of the target IP and the potential licensee may be recommended by a pre-trained mediator recommendation model, and the agreed matters may be mediated by the mediator recommended by the mediator recommendation model.

Further, the mediator recommendation model may recommend the mediator based on at least one of a field of expertise of the mediator, a mediation success rate of each mediator by technical field, or a past agreement tendency of each of the owner of the target IP and the potential licensee.

Further, as the at least one instruction is executed by the processor, a mediation plan for mediating requirement matters between the owner of the target IP and the potential licensee may be recommended by a pre-trained mediation plan recommendation model, and the agreed matters may include the mediation plan recommended by the mediation plan recommendation model.

Further, request matters may be acquired from each of the owner of the target IP and the potential licensee, and a term sheet in which the acquired request matters are collectively described may be generated and provided to each of the owner of the target IP and the potential licensee.

Further, the term sheet may indicate in a distinguishable manner, among the acquired request matters, matters on which mutual opinions have been agreed upon and matters on which mutual opinions have not been agreed upon.

Further, contents included in the concluded contract may be reflected on a predetermined blockchain.

Further, as the at least one instruction is executed by the processor, relative importance information for each of elements of the target item and the combination technologies may be acquired, a license fee limit for each of the elements and the combination technologies may be determined in a manner dependent on the acquired relative importance, and the plurality of target IPs may be determined at least partially based on the determined license fee limit and a license fee predetermined by the owner of the IP.

Further, in the searching, two or more candidate IPs may be searched for each of the elements of the target item and the combination technologies, as the at least one instruction is executed by the processor, a ranking may be made for the two or more candidate IPs searched for each of the elements of the target item and the combination technologies, and the ranking for the candidate IPs may be made based on at least one of a number of IPs held by an owner of the corresponding IP in the same technology theme, the number of citations of the corresponding IP, the presence/absence or number of papers related to the corresponding IP, or the presence/absence or number of preset licenses for the corresponding IP.

Further, a business package file including information on each of the elements of the target item, the combination technologies of the elements, IP for the elements of the target item, and IP for the combination technologies of the elements, may be generated, and the generated business package file may be controlled so as to be tradable on a business item trading platform.

Further, the business package file may be reflected on a predetermined blockchain.

Further, the blockchain may be a private blockchain accessible only to a subject who has purchased the business package file.

Further, in the blockchain, contract contents for the trade of the business package file may be described.

Further, the concluding of the contract may include at least one of: receiving an electronic signature from each of the owner of the target IP and the potential licensee; and receiving notarization for the concluded contract.

### EFFECT OF INVENTION

According to one embodiment, a potential licensee may easily search IP necessary for research on, development, production, sale, or rental of a target item based on a query. In addition, the potential licensee may easily make a transfer or license contract for the thus searched IP with an owner of the IP even without help of professional personnel such as a lawyer or a patent attorney.

In addition, an IP owner may induce more people to use his or her IP, and in some cases, may also obtain additional profit by allowing a third party to use IP that the IP owner himself or herself is not using or does not plan to use. Accordingly, more people may be induced to have interest in IP and to attempt right acquisition, and the market scale of IP transaction may grow quantitatively or qualitatively.

In addition, a result searched by the potential licensee may be used as a business item having unique value, and in that various people may be involved for realization of such a business item, there is an effect of job creation.

Furthermore, in a transaction process of IP, an IP owner may secure information on the target item of the potential licensee, and in some cases, the IP owner or a third party may have an intention to invest in such a target item. That is, from a standpoint of the potential licensee, not only may a legal right of use for IP be secured, but also an investor for his or her target item may be recruited through a computer device according to one embodiment.

### BRIEF DESCRIPTION OF THE DRAWINGS

FIG. 1 exemplarily illustrates a computer device according to one embodiment and various entities connected with such a computer device through a network.
FIG. 2 exemplarily illustrates a block diagram showing a configuration of a computer device according to one embodiment.
FIG. 3 conceptually illustrates an architecture for deep learning.
FIG. 4 conceptually illustrates an architecture for a convolutional neural network.
FIG. 5 exemplarily illustrates a flowchart showing a procedure for training a language model used for searching target IP in a computer device according to one embodiment.
FIG. 6 exemplarily illustrates a flowchart for a method for searching target IP for a target item according to one embodiment.
FIG. 7 exemplarily illustrates a result searched in response to a query for a target item in a computer device according to one embodiment.
FIG. 8 exemplarily illustrates a flowchart showing a procedure for searching elements of a target item and combination technologies thereof according to one embodiment.
FIG. 9 exemplarily illustrates whether a patent including an additional element not included in elements of a target item in search results, or including a combination technology different from combination technologies of the elements, in claims is included in the search results, according to one embodiment.
FIG. 10 exemplarily illustrates a flowchart regarding a procedure executed in a situation in which the additional element or the different combination technology illustrated in FIG. 9 are presented as a reference technology to a potential licensee.
FIGS. 11 to 13 conceptually illustrate what patents may be searchable when wording regarding performance improvement of a target item is included in a query.
FIG. 14 exemplarily illustrates a contract concluded between an IP owner and a potential licensee regarding the IP by a computer device according to one embodiment.
FIG. 15 conceptually illustrates an example of matters to be input by an IP owner in a step of concluding an IP contract according to one embodiment.
FIG. 16 exemplarily illustrates a term sheet generatable according to one embodiment.
FIG. 17 conceptually illustrates that an information set for research on, development, or production of a target item generated according to one embodiment is stored and protected in a blockchain.

### BEST MODE FOR CARRYING OUT THE INVENTION

Advantages and features of the present invention, and methods for achieving them, will become clear with reference to the embodiments described below in detail in conjunction with the accompanying drawings. However, the present invention is not limited to the embodiments disclosed below, but may be implemented in various different forms, and only the present embodiments make the disclosure of the present invention complete, and common knowledge in the art to which the present invention belongs It is provided to fully inform the holder of the scope of the invention, and the present invention is only defined by the scope of the claims.

In the description of the present invention, if it is determined that a detailed description of a related known function or configuration may unnecessarily obscure the subject matter of the present invention, the detailed description will be omitted. In addition, terms to be described later are terms defined in consideration of functions in the present invention, which may vary according to the intention or custom of a user or operator. Therefore, the definition should be made based on the contents throughout this specification.

Hereinafter, before description of embodiments of the present invention, some terms will be first described.

The term 'use' refers to acts such as research, development, production, utilization, assignment, rental, import, an offer for assignment or rental, or the like. Such use has a meaning somewhat similar to 'practice' under the Patent Act.

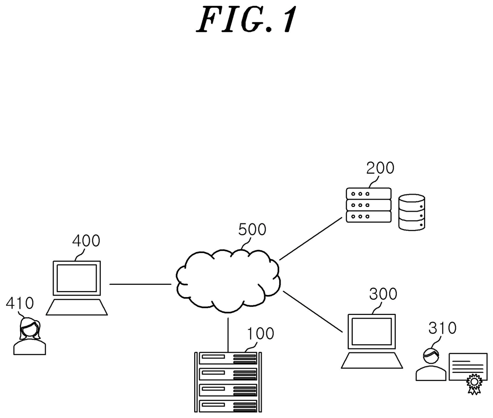

FIG. 1 exemplarily illustrates a computer device 100 according to one embodiment and various entities 200 to 400 connected with such a computer device 100 through a network 500. With reference to FIG. 1, the computer device 100, an IP information providing server 200, an IP owner terminal 300, and a potential licensee terminal 400 may perform communication with each other through the network 500. Here, the drawing illustrated in FIG. 1 is merely exemplary, and technical teachings of the present invention are not to be limitedly interpreted as being illustrated in FIG. 1.

Here, the network 500 means a wireless or wired network. Among them, in the case of a wireless network, for example, at least one of LTE (long-term evolution), LTE-A (LTE Advance), CDMA (code division multiple access), WCDMA (wideband CDMA), UMTS (universal mobile telecommunications system), WiBro (Wireless Broadband), WiFi (wireless fidelity), Bluetooth, NFC (near field communication), GNSS (global navigation satellite system), or the like may be included. In addition, in the case of a wired network, for example, at least one of USB (universal serial bus), HDMI (high definition multimedia interface), RS-232 (recommended standard 232), LAN (Local Area Network), WAN (Wide Area Network), Internet, a telephone network, or the like may be included.

The IP information providing server 200 is a device prepared to provide or disclose information on IP. For example, a server or the like disclosing published patent gazettes, registered patent gazettes, or the like may be included in such an IP information providing server 200. In addition, a server in which know-how (or trade secret) of an individual, a company, or the like is privately stored or managed, for example, a server storing know-how based on blockchain, may also be included in such an IP information providing server 200.

The IP information providing server 200 may provide information on various types of IP. For example, information on at least one of a registered patent, a published patent, a registered utility model, a published utility model, a registered trademark, a published trademark, a registered design, a published design, a copyright, a software, or a know-how may be provided by the IP information providing server 200.

The IP information providing server 200 may provide various types of information as below for each of the various types of IP described above, but is not limited thereto.
- who an owner is
- what type of right it is
- what technology it relates to
- to what extent protection is to be sought
- until when protection is possible
- in which country the right is valid

The IP owner terminal 300 refers to a terminal available to an IP owner 310, for example, a patentee, a utility model owner, a trademark owner, a design owner, a copyright owner, or a know-how owner. Such a terminal 300, as illustrated in FIG. 1, may be a computer, a notebook, or the like, or alternatively, may be a smartphone or a smart pad, but is not limited thereto.

Through the IP owner terminal 300, the IP owner 310 may input various types of information as below, and such input information may be delivered from the IP owner terminal 300 to the computer device 100, but types of information that may be input or delivered are not limited thereto.
- (in case of assignment) payment amount for assignment
- (in case of license conclusion) at least one of license fee, method of payment method of license fee, condition of termination of license, license territory, license field, or claim numbers in which the legal right of use is to be granted
- availability of know-how transfer (technical assistance)

To this end, the IP owner terminal 300 may be provided with a user interface for receiving, as input, predetermined information from the IP owner 310. In this case, according to one embodiment, the IP owner terminal 300 may present, using the above-described user interface, a guide which the IP owner 310 may refer to when inputting the above information, for example, maximum, minimum, or average amounts of payment amount for assignment or license fee, or the like received from the computer device 100, to the IP owner 310, and this will be described later.

Meanwhile, the above-described 'know-how transfer' refers to an act in which the IP owner 310 delivers his or her know-how to a potential licensee 410. Typically, transferring IP such as a registered patent or a registered utility model to the potential licensee 410 or granting a license for the same to the potential licensee 410 means granting a legal right of use for such IP to the potential licensee 410.

In this case, in the above-described transfer of IP, transfer of 'know-how' is not necessarily included. First, since know-how has 'secrecy', it is not described in the above-described registered patent or registered utility model gazette. However, depending on a potential licensee 410, for use of a target item which the potential licensee 410 is targeting, not only a legal right regarding the registered patent or the registered utility model but also know-how not described in these gazettes may be required.

In view of the foregoing, in one embodiment, the IP owner 310 may determine whether to transfer know-how held in their possession to a third party such as the potential licensee 410. Such a determined matter may be delivered to the computer device 100 through the IP right holder terminal 300. The potential licensee 410 may identify, through the computer device 100, whether the transfer of know-how is available in relation to relevant IP required by the potential licensee 410.

Meanwhile, the IP owner 310 may input more various types of information through such an IP owner terminal 300, and this will be described later.

The potential licensee terminal 400 refers to a terminal available to the potential licensee 410. Here, the potential licensee 410 refers to a requester who desires to practice IP held by the IP owner 310. Such a potential licensee terminal 400, as illustrated in FIG. 1, may be a computer, a notebook, or the like, or alternatively, may be a smartphone or a smart pad, but is not limited thereto.

Through the potential licensee terminal 400, the potential licensee 410 may input various types of information as below, and such input information may be delivered to the computer device 100, but types of information to be input or delivered are not limited thereto.
- intention of assignment or intention of license request
- (in case of intention of assignment) desired a payment amount for assignment
- (in case of intention of license conclusion) at least one of desired license fee, desired payment method of license fee, desired condition of termination of license, desired license territory, desired license field, or desired claim numbers
- whether there is a desire to receive know-how transfer (technical assistance)

To this end, the potential licensee terminal 400 may be provided with a user interface for receiving, as input, predetermined information from the potential licensee 410. In this case, according to one embodiment, the potential licensee terminal 400 may provide a guide which the potential licensee 410 may refer to when inputting the above information. Such a guide may include, for example, the above-described types of information input by the IP owner 310, maximum, minimum, or average amounts of payment amount for assignment or license fee aggregated by the computer device 100, and the like.

Meanwhile, the potential licensee 410 may input more various types of information through such a potential licensee terminal 400, and this will be described later.

The computer device 100 according to one embodiment may be implemented by a server.

First, the computer device 100 acquires a query input by the potential licensee 410 from the potential licensee terminal 400. The query here refers to a word designating a target item. In addition, the target item may be a product or a method (or process), but is not limited thereto. Such a target item refers to an object for research, development, production, sale, utilization, rental, or the like by the potential licensee 410.

The computer device 100 searches target IP used in at least one of research on, development, production, sale, utilization, or rental of the target item based on the acquired query. In the searching, an artificial intelligence model, specifically a language model, may be used, and this will be described later.

The thus searched target IP may be one or more. Specifically, in a case where a plurality of target IPs are searched, such target IPs include IPs regarding each of elements of the target item and/or IPs regarding combination technologies used for combining such elements.

Here, elements of a target item refer to elements constituting the target item. For example, elements constituting an invention under the Patent Act may be an example of the elements of the above-described target item.

In addition, combination technologies refer to technologies used for combining, blending, connecting, linking, or testing such elements for performance, operation, production, or utilization of a target item. For example, when the elements are materials, ratios or methods of mixing such materials, methods of reacting such materials, methods of analyzing results of the reaction, or the like may be included therein. In addition, when the elements are parts, methods of assembling them with each other, such assembled resultant products themselves or methods of testing the resultant products, methods of operating assembled resultant products, methods of measuring operation performance of the resultant products, methods of improving operation performance of the resultant products, or the like may be examples of the combination technologies, but are not limited thereto. According to one embodiment, such combination technologies may be referred to as blending technologies, linking technologies, connecting technologies, testing technologies, or the like, but hereinafter will be referred to as combination technologies.

Meanwhile, the above-described combination technologies may, in some cases, be classified as elements of a target item. In addition, the above-described elements of a target item may also be classified as combination technologies.

According to one embodiment, the computer device 100 facilitates the execution of a contract reflecting agreed matters between the IP owner 310 and the potential licensee 410, while setting a legal right of use of the above-described searched target IP as a subject matter of the contract.

Here, the above-described contract may include a transfer contract or a license contract regarding the above-described searched target IP, but is not limited thereto.

In addition, the above-described agreed matters may include at least one of assignment amount of the above-described searched target IP, license fee, method of payment method of license fee, condition of termination of license, license territory, license field, claim numbers in which the legal right of use is to be granted, or availability of know-how transfer (technical assistance), but are not limited thereto.

In a process of concluding a contract by the computer device 100, an act of signing, specifically electronic signing, by the IP owner 310 and the potential licensee 410 regarding agreed matters between each other may be performed in the computer device 100. Additionally, an act of obtaining notarization for such a concluded contract may also be performed in the computer device 100.

In this case, in a process of concluding such a contract, according to one embodiment, a term sheet may be generated and provided to each of the IP owner 310 and the potential licensee 410, and this will be described later.

Meanwhile, in the above-described contract conclusion, an agreement needs to be inevitably made between the IP owner 310 and the potential licensee 410, but since the two parties 310 and 410 are entangled with interests, such an agreement between them may not be smoothly made. Accordingly, in one embodiment, the computer device 100 may provide a solution for mediating between them, and this will be described later.

As described above, according to one embodiment, a potential licensee may easily search IP necessary for research on, development, production, sale, or rental of a target item based on a query. In addition, the potential licensee may easily make a transfer or license contract for such searched IP with an owner of the IP even without help of professional personnel such as a lawyer or a patent attorney.

In addition, an IP owner may induce more people to use his or her IP, and in some cases, may also obtain additional profit by allowing a third party to use IP that the IP owner himself or herself is not using or does not plan to use. Accordingly, more people may be induced to have interest in IP and to attempt right acquisition, and the market scale of IP transaction may grow quantitatively or qualitatively.

In addition, a result searched by the potential licensee may be used as a business item having unique value, and in that various people may be involved for realization of such a business item, there is an effect of job creation.

Furthermore, in a transaction process of IP, an IP owner may secure information on the target item of the potential licensee, and in some cases, the IP owner or a third party may have an intention to invest in such a target item. That is, from a standpoint of the potential licensee, not only may a legal right of use for IP be secured, but also an investor for his or her target item may be recruited through a server according to one embodiment.

Hereinafter, a more detailed description of such a computer device 100 will be provided.

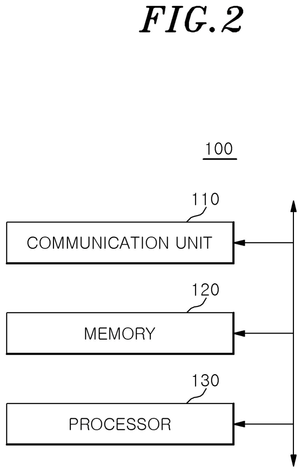

FIG. 2 is an exemplary configuration diagram of the computer device 100 according to one embodiment. With reference to FIG. 2, the computer device 100 includes a communication unit 110, a memory 120, and a processor 130. However, the configuration diagram illustrated in FIG. 2 is merely exemplary, and technical teachings of the present invention are not to be limitedly interpreted by the configuration diagram illustrated in FIG. 2. For example, the computer device 100 may include at least one configuration not illustrated in FIG. 2, or may not include at least one configuration illustrated in FIG. 2.

The communication unit 110 may be implemented by a wired or wireless communication module. The computer device 100 may perform communication, through such a communication unit 110, with an external terminal or a server, for example, identification numbers 200, 300, or 400 illustrated in FIG. 1.

The memory 120 may be implemented by a medium storing information. Such a medium may be at least one storage medium among a flash type memory, a hard disc type memory, a multimedia card micro type memory, a card-type memory (e.g., an SD or XD memory, etc.), a random access memory (RAM), a static random access memory (SRAM), a read-only memory (ROM), an electrically erasable programmable read-only memory (EEPROM), a programmable read-only memory (PROM), a magnetic memory, a magnetic disc, and an optical disc, but is not limited thereto.

Various types of information may be stored in such a memory 120. For example, in the memory 120, information acquired by the computer device 100 from external entities 200, 300, and 400 through the communication unit 110 may be stored.

Specifically, in the memory 120, IP information disclosed from the IP information providing server 200 may be stored. For storing, the computer device 100 may crawl disclosed information from the IP information providing server 200, but is not limited thereto. In addition, in the memory 120, such IP information may be stored as original, and in some cases, may be stored after being pre-processed. The pre-processing may include processing in which, if disclosed IP information is a registered patent gazette, the entire contents described in such a registered patent gazette are summarized, or each of claims, effects of invention, detailed description, and drawings is summarized. Of course, types of pre-processing are not limited thereto, and it is apparent that various types of processing that may be performed for storing and searching documents may be included in such pre-processing.

In addition, in the memory 120, various types of information acquired from the IP owner terminal 300 may be stored. Specifically, in the memory 120, information input by the IP owner 310 into the IP owner terminal 300 as described above may be stored. In particular, in the memory 120, information on IP that is permitted to be searched as a target IP and information on IP that should not be included in search results as a target IP, among IPs of respective IP owners 310, may be stored.

In addition, in the memory 120, various types of information acquired from the potential licensee terminal 400 may be stored. Specifically, in the memory 120, information input by the IP owner 310 into the IP owner terminal 300 as described above may be stored.

Meanwhile, in the memory 120, information on each of elements of a target item, combination technologies of the elements, IPs regarding the elements of the target item, and IPs regarding the combination technologies of the elements may be stored. In this case, according to one embodiment, these pieces of information may be bundled into a single business package file.

In addition, in the memory 120, contents of a contract concluded between the IP owner 310 and the potential licensee 410, for example, a contract document, may be stored in an electronic document form, and according to one embodiment, a term sheet that forms the basis of such contract contents may be stored in an electronic document form.

In this case, according to one embodiment, some of the above-mentioned information that is described as being stored in the memory 120 may also be stored in a blockchain. To this end, a system constituting the blockchain may be connected to the computer device 100 illustrated in FIG. 1 or may be built including the computer device 100, but such a blockchain is not illustrated in FIG. 1. Information stored in the blockchain will be described later.

Meanwhile, in the memory 120, modules or models of various types may be implemented. When such modules or models are executed by a processor 130 described below, the intended function is performed. For example, such modules or models may include a language model for searching a target IP, a module for preparing a term sheet, a module for concluding a contract, a mediation plan recommendation module for recommending a mediation plan for requirement matters not agreed upon between the IP owner 310 and the potential licensee 410, or a mediator recommendation module for recommending a mediator.

At least one of the above-mentioned modules or models may be implemented based on a rule or based on an artificial intelligence network. Hereinafter, an artificial intelligence network and the like will be described.

In the present specification, a model or a module may mean any form of computer program operating based on a network function, an artificial neural network, and/or a neural network. Throughout the present specification, model, neural network, network function, and neural network may be used as interchangeable meanings. The neural network is configured with one or more nodes interconnected through one or more links to form input node and output node relationships within the neural network. The characteristics of a neural network may be determined by the number of nodes and links, the relationships between the nodes and links, and the weight values assigned to each link within the neural network. The neural network may be configured with a set of one or more nodes. A subset of nodes that constitute the neural network may form a layer.

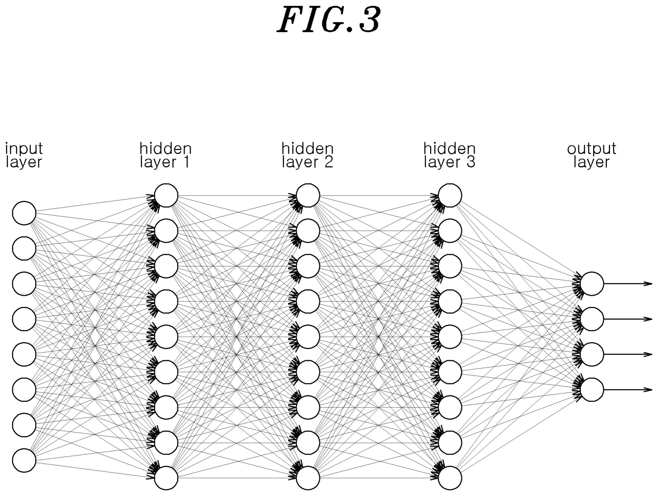

A deep neural network (DNN) may mean a neural network including a plurality of hidden layers in addition to an input layer and an output layer, and, as a concept for this is exemplarily illustrated in FIG. 3, the hidden layer in the middle is configured to be one or more, preferably two or more, in the deep neural network.

Such a deep neural network may include a convolutional neural network (CNN), a vision transformer, a recurrent neural network (RNN), a long short term memory (LSTM) network, a generative pre-trained transformer (GPT), an autoencoder, a generative adversarial network (GAN), a restricted Boltzmann machine (RBM), a deep belief network (DBN), a Q-network, a U-network, a Siamese network, a transformer, and the like, but is not limited thereto.

Alternatively, according to embodiments, the deep neural network may be a model trained using transfer learning. Here, transfer learning refers to a learning method in which a large amount of unlabeled training data is pre-trained in a semi-supervised or self-learning method to obtain a pre-trained model (or a base portion) with a first task, and the labeled training data is trained in a supervised learning method to implement a targeted model in order to fine-tune the pre-trained model to fit a second task. One of the models trained with the transfer learning method is bidirectional encoder representations from transformers (BERT), or the like, but is not limited thereto.

Particularly, in searching of one embodiment, an artificial intelligence model, specifically a language model may be used, and this will be described later.

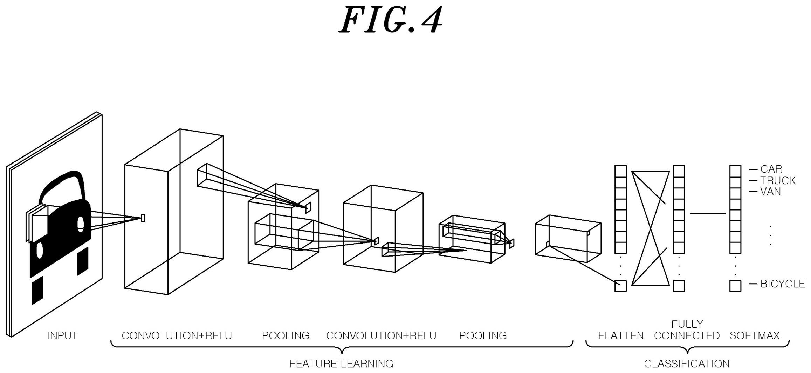

The above-mentioned description of the deep neural network is merely exemplary, and the present disclosure is not limited thereto. Here, in the case of the convolutional neural network illustrated in FIG. 4, it includes a feature extraction portion (feature learning) that extracts features from an image, and a classification portion (classification) that performs classification using the features thus extracted. The feature extraction portion may include a convolutional layer in which features are extracted from an image using a kernel, a ReLU layer which is one of activation functions, and a pooling layer for reducing the dimension of data, but is not limited thereto. In addition, the classification portion may include a flatten layer that arranges in a line the features extracted from the feature extraction portion, a fully connected layer in which classification is substantially performed, and a softmax function, but is not limited thereto.

The neural network may be trained by at least one method among supervised learning, unsupervised learning, semi-supervised learning, self-supervised learning, and reinforcement learning. Training of the neural network may be a process of applying knowledge for performing a specific operation to the neural network.

The neural network may be trained in a direction of minimizing error of an output. Training of the neural network is a process in which training data is repeatedly input to the neural network, the error between the output of the neural network for the learning data and a target is calculated, and the error of the neural network is backpropagated from the output layer to the input layer of the neural network in a direction of reducing the error so that weights of each node of the neural network are updated. In case of supervised learning, data (labeled data) in which a correct answer is labeled for each training data may be used, and in case of unsupervised learning, data (unlabeled data) in which a correct answer is not labeled for each training data may be used. The amount of change in the connection weight of each node being updated may be determined according to the learning rate. Calculation of the neural network for input data and backpropagation of error may constitute a learning cycle (epoch). The learning rate may be differently applied according to the number of repetitions of the learning cycle of the neural network. In addition, in order to prevent overfitting, methods such as an increase in training data, regularization, dropout for deactivating a part of nodes, a batch normalization layer, and the like may be applied.

Meanwhile, a model disclosed in one embodiment may borrow at least a portion of a transformer. The transformer may be configured with an encoder that encodes embedded data and a decoder that decodes the encoded data. The transformer may have a structure of receiving a series of data and outputting a series of data of a different type through encoding and decoding steps. In one embodiment, the series of data may be processed into a form computable by the transformer. The process of processing a series of data into a form that is computable by the transformer may include an embedding process. Expressions such as data token, embedding vector, embedding token, and the like may refer to embedded data in a form that the transformer may process.

In order for the transformer to encode and decode a series of data, the encoders and decoders within the transformer may process the data by using an attention algorithm. The attention algorithm may refer to an algorithm that, for a given query, finds the similarity of one or more keys, reflects the given similarity to the values corresponding to each key, and then calculates the attention value by taking the weighted sum of the values with the similarity reflected.

Depending on how the query, key, and value are set, various kinds of attention algorithms may be classified. For example, when queries, keys, and values are all set identically to find attention, this may mean a self-attention algorithm. In order to process a series of input data in parallel, when dimensions of an embedding vector are reduced and, for each divided embedding vector, an individual attention head is obtained to find attention, this may mean a multi-head attention algorithm.

In one embodiment, the transformer may be configured with modules that perform a plurality of multi-head self-attention algorithms or multi-head encoder-decoder algorithms. In one embodiment, the transformer may further include additional elements other than attention algorithms, such as embedding, normalization, softmax, or the like. A method of configuring a transformer using an attention algorithm may include a method disclosed in Vaswani et al., Attention Is All You Need, NIPS 2017, which is incorporated herein by reference.

The transformer may be applied to various data domains such as embedded natural language, divided image data, audio waveforms or the like, and may convert a series of input data into a series of output data. In order to convert data having various data domains into a series of data inputtable to the transformer, the transformer may embed the data. The transformer may process additional data expressing relative positional relationships or topological relationships among the series of input data. Alternatively, vectors expressing the relative positional relationships or topological relationships among the series of input data may be further reflected in the series of input data, allowing the series of input data to be embedded. In one example, the relative positional relationships among the series of input data may include word order in a natural language sentence, relative positional relationships of respective divided images, temporal order of divided audio waveforms, or the like, but are not limited thereto. The process of adding information expressing the relative positional relationships or topological relationships among the series of input data may be referred to as positional encoding.

With reference back to FIG. 2, the processor 130 will be described. First, the processor 130 according to one embodiment may perform technical features according to embodiments of the present disclosure to be described later, by executing at least one instruction stored in the memory 120. In one embodiment, the processor 130 may be configured with at least one core, and may include a processor for data analysis and/or processing such as a central processing unit (CPU) of the computer device 100, a general purpose graphics processing unit (GPGPU), a tensor processing unit (TPU), or the like.

Such a processor 130 may train a neural network or model designed in a machine learning or deep learning method. To this end, the processor 130 may perform calculations for training the neural network, such as processing input data for training, extracting features from the input data, calculating errors, updating weights of the neural network using backpropagation, or the like.

In addition, the processor 130 may perform inference for a predetermined purpose by using a model implemented in an artificial neural network manner.

Hereinafter, by executing at least one instruction stored in the memory 120 by the processor 130, various operations, functions, or the like that the computer device 100 may perform will be described.

First, the processor 130 may control the communication unit 110. Through this, the computer device 100 may acquire information by performing communication with various entities 200, 300, and 400 illustrated in FIG. 1 through the communication unit 110.

In addition, the processor 130 may read the above-described data or instructions stored in the memory 120, and may record new data or instructions in the memory 120. In addition, the processor 130 may modify or delete data or instructions already recorded. Hereinafter, this will be described in more detail.

By executing at least one instruction stored in the memory 120 by the processor 130, the computer device 100 acquires a query input by the potential licensee 410 from the potential licensee terminal 400. The query here refers to a word designating a target item. In addition, the target item may be a product or a method (or process), but is not limited thereto. Such a target item refers to an object for research, development, production, sale, utilization, rental, or the like by the potential licensee 410.

In addition, by execution of at least one instruction stored in the memory 120 by the processor 130, the computer device 100 searches a target IP used in at least one of research on, development, production, sale, utilization, or rental of a target item based on an acquired query.

In the search process, first, elements of the target item are searched. Further, an IP for each of the thus searched elements is searched. In addition, combination technologies for combining respective elements are searched. Subsequently, an IP for the thus searched combination technologies is searched. Of course, a searching process is not performed according to the above-described order, and performing differently from this is also included in the embodiment of the present invention.

Meanwhile, in the above-described search, an artificial intelligence model, specifically a language model, may be used. The language model refers to a model generated based on human language. Such a language model may be acquired in various manners. In one embodiment, the language model may be acquired in a transfer learning method. In transfer learning, as described above, the process is performed by pre-training a large amount of unlabeled training data (e.g., a corpus) in a semi-supervised or self-learning method to obtain a pre-trained model (or base) with a first task. Subsequently, the process of fine-tuning the pre-trained model to fit a second task is performed. In this fine tuning, labeled training data is used for training in a supervised learning method. In one embodiment, as one of the models trained in the transfer learning method, there may be bidirectional encoder representations from transformers (BERT), generative pre-trained transformer (GPT), or the like, but it is not limited thereto.

Here, such a language model according to one embodiment may be chatGPT based on GPT-3 or GPT-4. Specifically, GPT-3 is a third-generation language prediction model of the GPT-n series made by a company called OpenAI. GPT-3 is configured with 175 billion parameters, which is more than twice as large as GPT-2, the previous version introduced in May 2020. It is part of a pre-trained natural language processing (NLP) system.

It is said that the tasks that GPT-3 may perform include various language-related problem solving, randomized writing, arithmetic, translation, simple web coding based on given sentences, conversations, and the like.

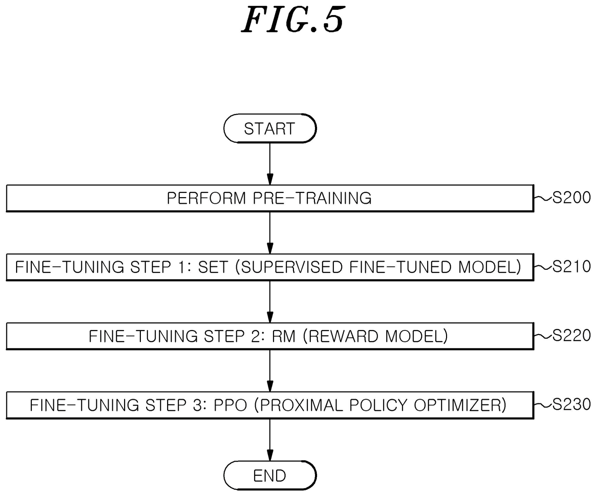

In a case of a language model according to one embodiment, the language model may be pre-trained with a general language, or as illustrated in FIG. 5, may be pre-trained (S200) based on at least one of a paper, a patent publication document, or a utility model publication document. Therefore, a more specialized search for IP may be made possible thereby. This is because, when pre-trained based on papers, patent publications, or utility model publications in a masked language model (MLM) method or a next sentence prediction (NSP) method, such a pre-trained model may acquire a language system, etc. for IP literature.

Additionally, in the fine-tuning of such a language model, reinforcement learning by human feedback (RLHF) may be performed. RLHF means that information determined by a human is used in learning in fine-tuning. For example, in the fine-tuning process of RLHF, a training process may be performed that uses a dialogue set generated by humans, as well as a training process that uses a ranking selected by humans for multiple outputs generated by the language model. More specifically, a supervised fine-tuned model (SFT) is generated (S210) by a dialogue set generated by humans. Subsequently, human-selected rankings of the outputs from this SFT model are fed back to the corresponding model (RM, Reward Model) (S220), and then fine-tuning is performed (S230) by proximal policy optimization (PPO). Here, fine-tuning by PPO refers to a reinforcement learning policy algorithm, which continuously adjusts the current policy based on the tasks performed by the agent and the rewards received. In the PPO, the process proceeds in the sequence of new prompt -> PPO - > generate output -> calculate reward, with the calculate reward being updated and provided back to the new prompt.

Meanwhile, by executing at least one instruction stored in the memory 120 by the processor 130, the target IP searched by the computer device 100 may be one or more. Specifically, in a case where a plurality of target IPs are searched, such target IPs include IPs regarding each of elements of the target item and/or IPs regarding combination technologies used for combining such elements.

In addition, by executing at least one instruction stored in the memory 120 by the processor 130, the computer device 100 concludes a contract in which the legal right of use of the aforementioned searched target IP is set as a subject matter of the contract, and in which the agreed matters between the IP owner 310 and the potential licensee 410 are reflected.

Here, the above-described contract may include a transfer contract or a license contract regarding the above-described searched target IP, but is not limited thereto.

In addition, the above-described agreed matters may include at least one of payment amount for assignment of the above-described searched target IP, license fee, method of payment method of license fee, condition of termination of license, license territory, license field, claim numbers in which the legal right of use is to be granted, or availability of know-how transfer (technical assistance), but are not limited thereto.

In a process of concluding a contract by the computer device 100, an act of signing, specifically electronic signing, by the IP owner 310 and the potential licensee 410 regarding agreed matters between each other may be performed in the computer device 100. Additionally, an act of obtaining notarization for such a concluded contract may also be performed in the computer device 100.

In this case, in a process of concluding such a contract, according to one embodiment, a term sheet may be generated and provided to each of the IP owner 310 and the potential licensee 410, and this will be described later.

Meanwhile, in the above-described contract conclusion, an agreement needs to be inevitably made between the IP owner 310 and the potential licensee 410, but since the two parties 310 and 410 are entangled with interests, such an agreement between them may not be smoothly made. Accordingly, in one embodiment, the computer device 100 may provide a solution for mediating an agreement between them, and this will be described later.

Hereinafter, a method for searching target IP for a target item according to one embodiment, which may be performed by such a computer device 100, will be described.

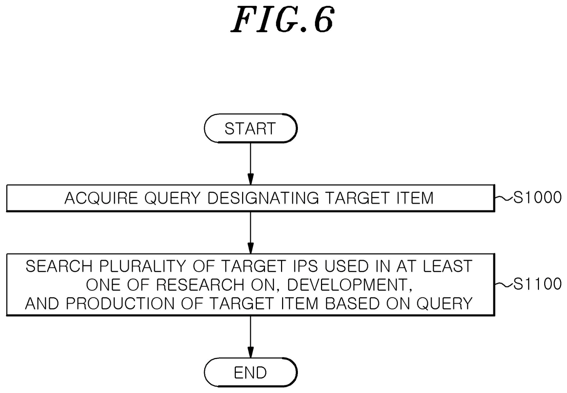

FIG. 6 exemplarily illustrates a flowchart for a method for searching target IP for a target item according to one embodiment. Here, the flowchart is merely exemplary, and the spirit of the present invention is not limited thereto. For example, according to one embodiment, each step may be performed in an order different from that illustrated in FIG. 6, or at least one step not illustrated in FIG. 6 may further be performed, or at least one of the steps illustrated in FIG. 6 may not be performed.

With reference to FIG. 6, step S1000 of acquiring a query designating a target item is performed.

In addition, based on the query, step S1100 of searching a plurality of target IPs used in at least one of research on, development, or production of the target item is performed. In this case, the plurality of target IPs include IP for each of at least two elements among the elements of the target item and/or IP for combination technologies used to combine the elements for performance, operation, production, or utilization of the target item.

In addition, although not illustrated in FIG. 6, a step of concluding a contract reflecting agreed matters between the owner of the target IP and the potential licensee, while setting the legal right of use of the searched target IP as the subject matter of the contract, is performed.

As described above, according to one embodiment, a potential licensee may easily search IP necessary for research on, development, production, sale, or rental of a target item based on a query. In addition, the potential licensee may easily make a transfer or license contract for such searched IP with an owner of the IP even without help of professional personnel such as a lawyer or a patent attorney.

In addition, an IP owner may induce more people to use his or her IP, and in some cases, may also obtain additional profit by allowing a third party to use IP that the IP owner himself or herself is not using or does not plan to use. Accordingly, more people may be induced to have interest in IP and to attempt right acquisition, and the market scale of IP transaction may grow quantitatively or qualitatively.

In addition, a result searched by the potential licensee may be used as a business item having unique value, and in that various people may be involved for realization of such a business item, there is an effect of job creation.

Furthermore, in a transaction process of IP, an IP owner may secure information on the target item of the potential licensee, and in some cases, the IP owner or a third party may have an intention to invest in such a target item. That is, from a standpoint of the potential licensee, not only may a legal right of use for IP be secured, but also an investor for his or her target item may be recruited through a server according to one embodiment.

Hereinafter, according to one embodiment, tasks related to concluding an IP contract performed in the computer device 100 will be described, however, the following is merely exemplary, and the technical teachings of the present invention are not to be interpreted as being limited thereto.

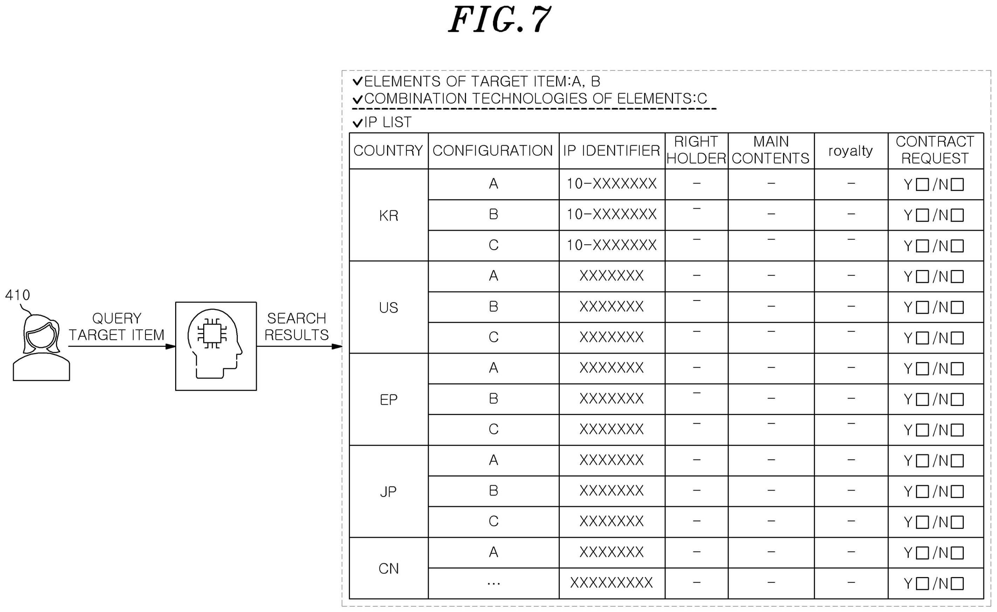

FIG. 7 exemplarily illustrates a result searched in response to a query for a target item in a computer device according to one embodiment. With reference to FIG. 7, a query of the potential licensee 410 is delivered to the computer device 100. Such a query refers to a word designating a target item. In addition, the target item may be a product or a method (or process), but is not limited thereto. Such a target item refers to an object for research, development, production, sale, utilization, rental, or the like by the potential licensee 410.

Then, the computer device 100, based on the acquired query, searches a target IP used in at least one of research on, development, production, sale, utilization, or rental of a target item, and delivers the result to the terminal 400 of the potential licensee 410.

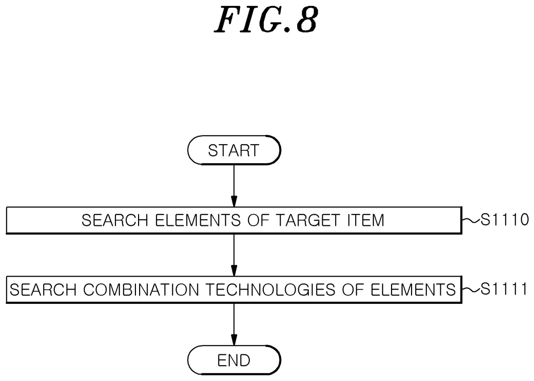

In this case, the searching process may be carried out in various ways. One of the measures is illustrated in FIG. 8.

With reference to FIG. 8, step S1110 of searching elements of the target item based on the query of the potential licensee 410 is performed. Whether the target item includes certain elements may be searched by a language model, but is not limited thereto.

In addition, step S1111 of searching combination technologies for combining the thus searched elements is performed. Such combination technologies also may be searched by the language model. In the searching, for example, when as a query, "combination technologies for combining the 'previously searched elements' for performance, operation, production, or utilization of the target item" is input to the language model, as a result thereof, the combination technologies may be searched. In this case, step S1111 of searching for such combination technologies may be performed by the potential licensee 410, or may be performed by the processor 130 according to one embodiment.

Then, the IP for each of the thus searched elements or for each of the combination technologies may be searched.

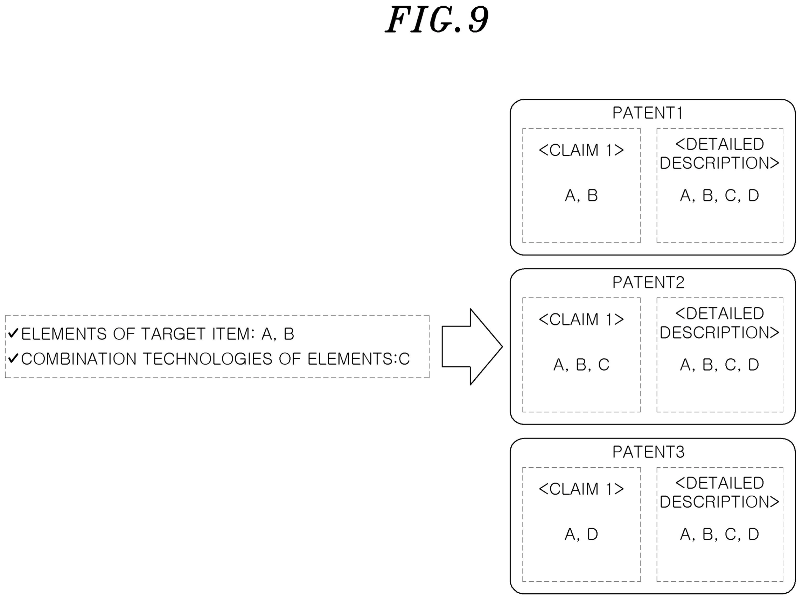

Meanwhile, the target IP as search results may include a patent or a utility model. Specifically, the target IP may be a patent or a utility model in which at least one of the elements of the target item or the combination technologies of such elements is described in a claim. One reason why the potential licensee receives a transfer of IP from an IP owner or is granted a license is to avoid infringing the IP of the IP owner. Here, "infringing" means that, when the corresponding IP is a patent or a utility model, implementation of elements of the target item or combination technologies is carried out including all elements described in the claim of the corresponding patent or utility model. Therefore, the target IP to be searched may also include a patent or a utility model in which at least one of the elements of the target item or the combination technologies is described in the claim. This is exemplarily illustrated in FIG. 9. With reference to FIG. 9, among patents 1 to 3, patents 1 and 2, in which the elements A and B of the target item or the combination technology C is included in the claim, may be searched as a target IP. However, patent 3, in which D, which is neither an element of the target item nor a combination technology, is included in the claim, may not be searched as the target IP.

Here, according to one embodiment, a step of selecting patents such as the aforementioned patent 3, that is, patents or utility models in which an additional element not included in the target item is described in the claim or a combination technology different from the combination technologies of the elements is described, may be performed. The thus selected patents may be controlled so as not to be searched as the target IP. This is because, even if the potential licensee 410 practices the thus selected patents or utility models, the rights of the IP owner 310 are not infringed. In this case, whether it is an additional element or a different combination technology may be according to an input of the potential licensee 410.

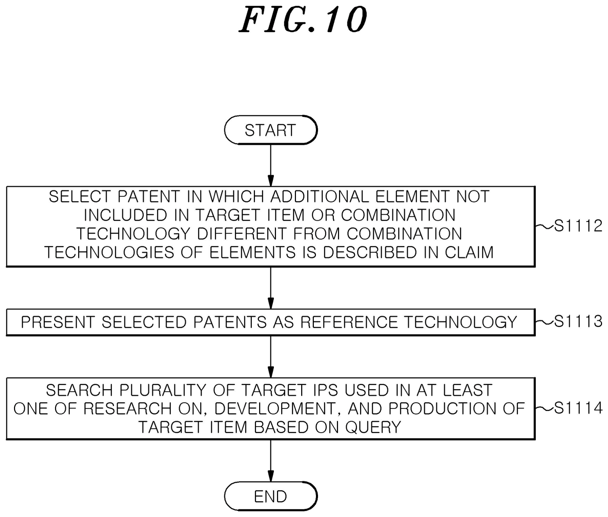

However, depending on the case, the thus selected patents may be used as a reference technology for the potential licensee 410. This is because the potential licensee 410 may obtain insight regarding portions not previously considered by himself or herself 410 from the thus selected patents. Hereinafter, with reference to FIG. 10, this will be described.

With reference to FIG. 10, step S1112 of selecting patents in which an additional element not included in the target item is described, or a combination technology different from the combination technologies of the elements is described in the claim, may be performed.

In addition, step S1113 of presenting the selected patents to the potential licensee as a reference technology in research on or development of the target item may be performed.

In addition, when a search request for the reference technology is received from the potential licensee, step S1114 of searching an IP including at least one of the additional element or the different combination technology, may be performed.

That is, according to FIG. 10, the potential licensee 410 may also be provided with information on an IP which is a configuration typically not included in the target item, but is usable as a reference technology.

Meanwhile, some of the IP owners 310 may wish that their IP not be searched. An IP owner 310 who has no intention to transfer IP or grant a license corresponds to this. Alternatively, when the IP owner, himself or herself 310 has a plurality of IP, the IP owner 310 may have an intention of transferring or granting a license only for a part thereof.

Accordingly, in one embodiment, a step of acquiring information on IP that may be included in the search results or IP that should not be included in the search results from the IP owner 310 may be performed. In this case, the plurality of target IPs as the search results may be searched among the IP that may be included in the search results.

Meanwhile, the aforementioned query may include wording designating performance improvement of the target item. For example, wording such as "improvement of amplification efficiency," "improvement of sensitivity or specificity," or "improvement of communication efficiency" may be included in the query together with wording designating the target item.

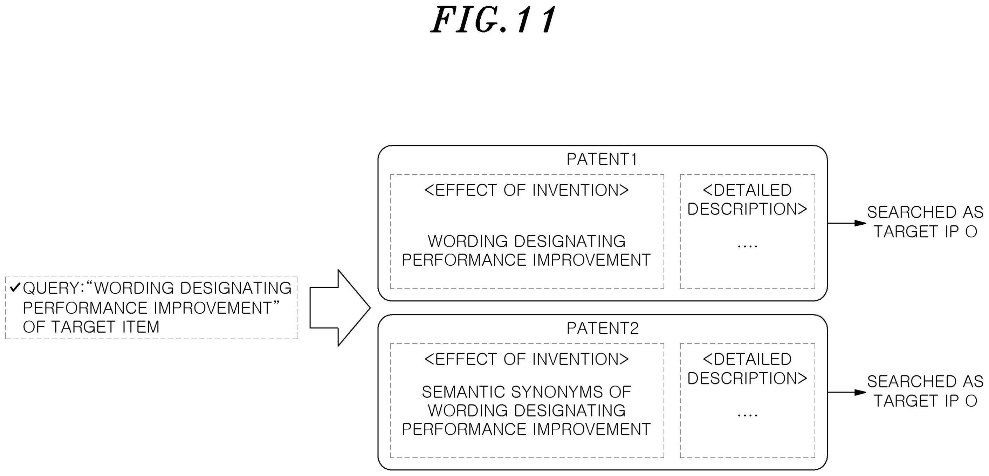

In this case, in the searching step, patents or utility models in which such wording and at least one of semantic synonyms of such wording are included in the section describing the effect of invention may be searched as the target IP. This is exemplarily illustrated in FIG. 11. With reference to FIG. 11, patent 1 or patent 2 in which "wording meaning performance improvement" or "semantic synonyms of wording meaning performance improvement" as such are included in the section of the effect of invention may be searched as the target IP.

Alternatively, the aforementioned query may include quantitative index wording indicating performance of the target item. For example, wording such as "improvement of amplification efficiency by 10%," "improvement of sensitivity by 20%," or "improvement of communication efficiency by 50%" may be included in the query together with wording designating the target item.

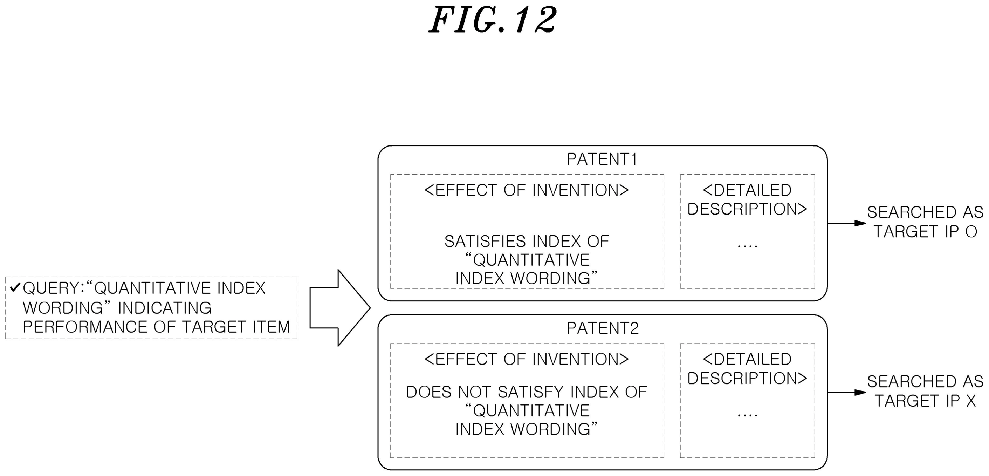

In this case, in the searching step, a patent or utility model in which the performance of the target item extracted from the section describing the effect of invention satisfies a range limited by the quantitative index wording may be searched as the target IP, and this is exemplarily illustrated in FIG. 12. In this case, whether extracting matters regarding the performance of the target item from the effect of invention, and whether the thus extracted performance satisfies the range limited by the quantitative index wording, may be determined by the aforementioned language model.

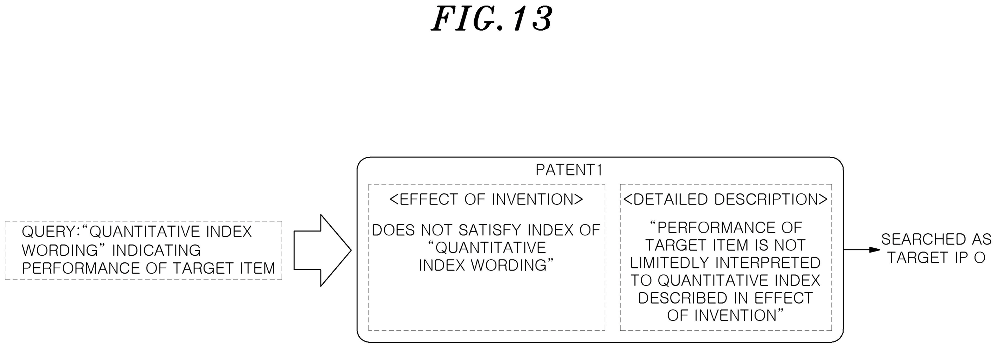

In this case, a patent or utility model in which the performance of the target item extracted from the section describing the effect of invention deviates from the range limited by the quantitative index wording may also be searched as the target IP according to the embodiment. For example, when it is a patent or utility model in which the performance of the target item in the detailed description of invention is described as not being limitedly interpreted as that described in the detailed description of invention or the effect of the invention, the patent or utility model may be an IP necessary for use of the potential licensee 410, and this is exemplarily illustrated in FIG. 13. To this end, in one embodiment, the above-described language model may identify, when the IP is a patent or a utility model, from the content of the section in which the detailed description of invention is described, whether content stating that the performance of the target item is not to be limitedly interpreted as that described in the detailed description of invention or the effect of invention is included.

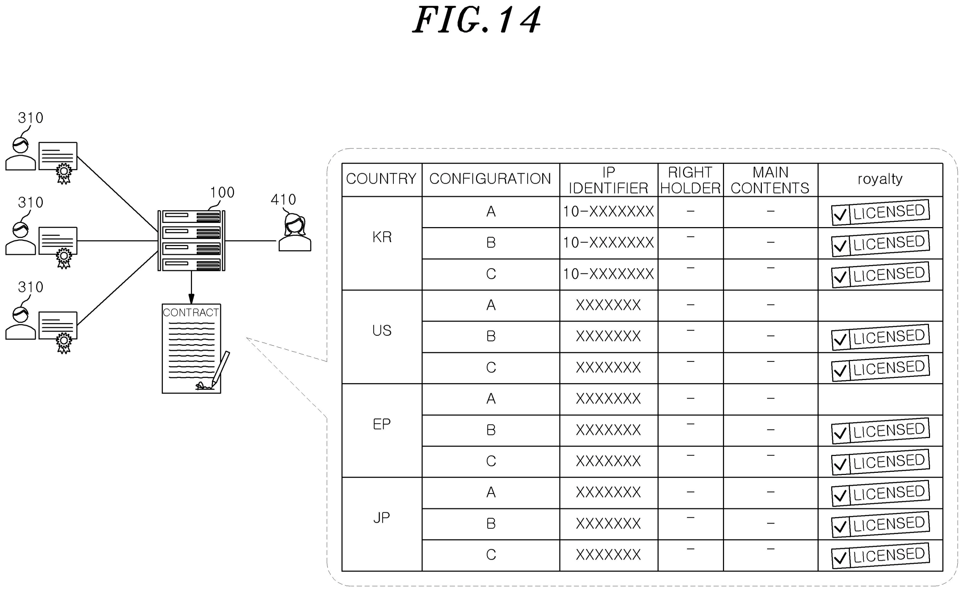

Meanwhile, FIG. 14 exemplarily illustrates a contract concluded between an IP owner and a potential licensee regarding the IP by a computer device according to one embodiment. With reference to FIG. 14, it is exemplarily illustrated in the contract which IP was licensed by country. That is, according to one embodiment, through the computer device 100, a contract is concluded between the IP owner 310 and the potential licensee 410, and a contract document in the form of an electronic document is prepared. Here, in the step of concluding the contract, at least one of a step of obtaining an electronic signature from each of the owner of the target IP and the potential licensee, or a step of obtaining notarization for the concluded contract may be included.

Meanwhile, the above-described contract may include a transfer contract or a license contract regarding the above-described searched target IP, but is not limited thereto.

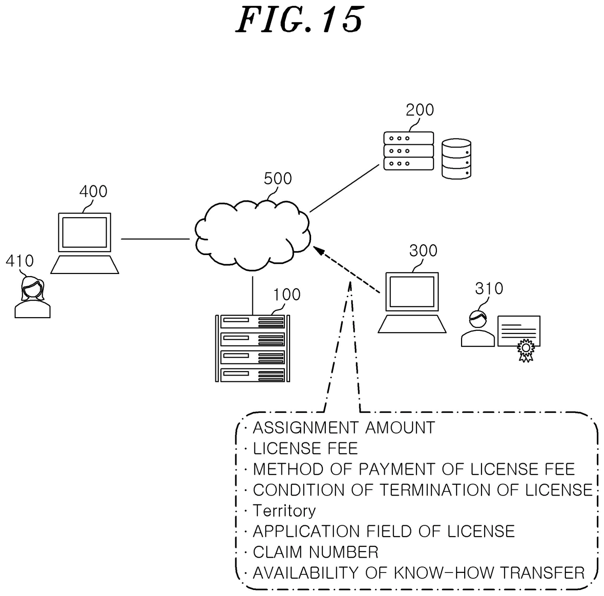

In addition, the above-described agreed matters may include at least one of payment amount for assignment of the above-described searched target IP, license fee, method of payment method of license fee, condition of termination of license, license territory, license field of license, claim numbers in which the legal right of use is to be granted, or availability of know-how transfer (technical assistance), but are not limited thereto. An example of such agreed matters is exemplarily illustrated in FIG. 15.

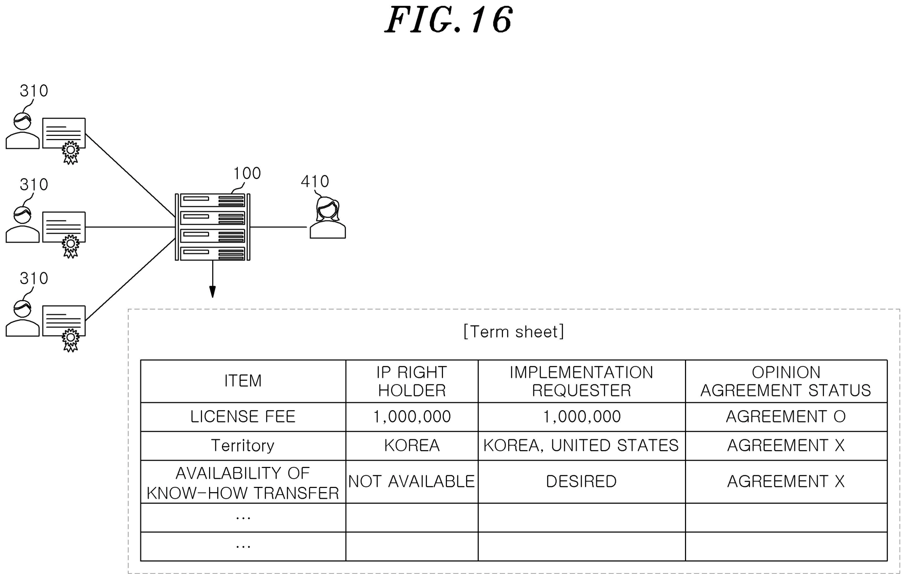

Meanwhile, in one embodiment, according to the embodiment in the process of concluding such contract, a term sheet may be generated and provided to each of the IP owner 310 and the potential licensee 410. The term sheet means a document in which portions desired by each party to the contract are described, and this is exemplarily illustrated in FIG. 16. To this end, a step of acquiring request matters from each of the owner of the target IP and the potential licensee, and a step of generating a term sheet in which the acquired request matters are collectively described and providing it to each of the owner of the target IP and the potential licensee may be performed. In this case, in such a term sheet, among request matters acquired from both parties, matters on which mutual opinions have been agreed upon and matters on which mutual opinions have not been agreed upon, may be separately marked. Therefore, both parties to the contract may quickly and accurately identify the aspects that require mutual coordination through such a term sheet.

Meanwhile, in the above-described contract conclusion, an agreement needs to be inevitably made between the IP owner 310 and the potential licensee 410, but since the two parties 310 and 410 are entangled with interests, such an agreement between them may not be smoothly made. Accordingly, in one embodiment, the computer device 100 may provide a solution to mediate agreement between them.

For example, a mediator recommendation model trained based on the aforementioned artificial intelligence network may be provided by the computer device 100. Such a mediator recommendation model is pre-trained to recommend a mediator (arbitrator) mediating the requirement matters between the owner of the target IP and the potential licensee. Accordingly, the agreed matters to be included in the contract may be derived from a mediator recommended by such a mediator recommendation model.

Here, such a mediator recommendation model may be trained by a supervised learning method. As training data, at least one of the field of expertise of the mediator, the mediation success rate of each mediator by technical field, or the past agreement tendency of each of the owner of the target IP and the potential licensee may be included.

Alternatively, a mediation plan recommendation model trained based on the aforementioned artificial intelligence network may be provided by the computer device 100. Such a mediation plan recommendation model is pre-trained to recommend mediation plans mediating the requirement matters between the owner of the target IP and the potential licensee. Accordingly, the agreed matters to be included in the contract may include mediation plans recommended by such a mediation plan recommendation model.

Here, such a mediation plan recommendation model may be trained by a supervised learning method. As training data, information on which mutual opinions have not been agreed upon and mediation plans in this case may be included, but are not limited thereto.

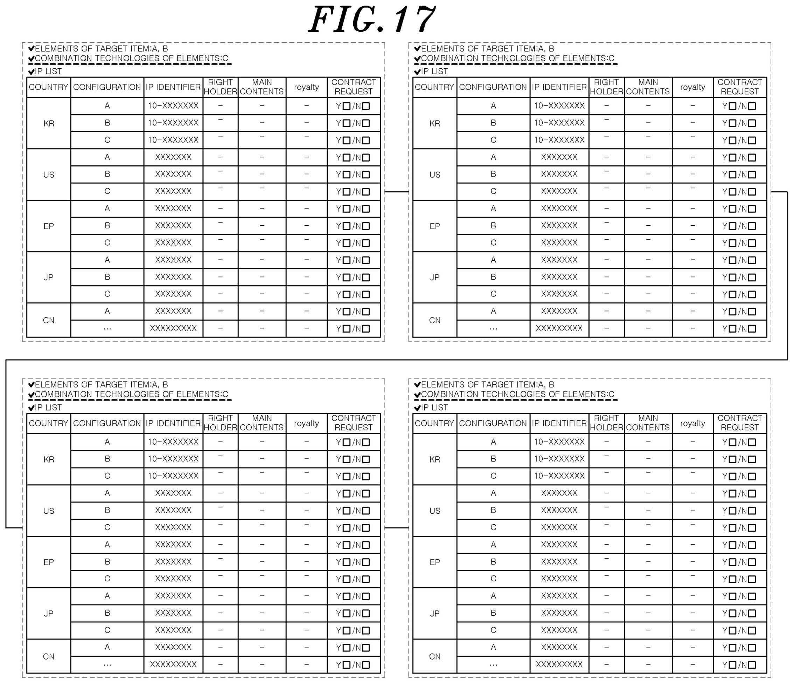

Meanwhile, according to one embodiment, various information generated by the computer device 100 may be stored in a blockchain. In the case of the blockchain, due to its characteristics, forgery or falsification is not easy. In addition, in the case of a private blockchain, it also tends to be excellent in security. Accordingly, according to one embodiment, contents regarding the contract concluded by the computer device 100 may be reflected in a predetermined blockchain. Alternatively, when the aforementioned business package file, that is, the business package file including information on each of the elements of the target item, the combination technologies of the elements, the IP for the elements of the target item, and the IP for the combination technologies of the elements, is generated, such a business package file may also be reflected in the blockchain. In FIG. 17, it is exemplarily illustrated that the aforementioned contents are reflected in the blockchain. Such a business package file may be traded on a predetermined business item trading platform. The computer device 100 according to one embodiment may not only control such a business package file to be tradable on the aforementioned business item trading platform, but also, in this case, the contract contents associated with the trading of the business package file may be reflected in the blockchain.

Meanwhile, according to one embodiment, in the process of concluding a contract between the potential licensee 410 and the IP owner 310 through the computer device 100, a license fee for the IP needs to be determined. To this end, first, the IP owner 310 may input a license fee desired by himself or herself using his or her terminal 300, as described above. In addition, in this process, at least one of a maximum amount, a minimum amount, or an average amount of the payment amount for assignment or the license fee based on statistics or artificial intelligence may be provided as reference information from the computer device 100 to the IP owner 310, as already described.

Meanwhile, the potential licensee 410 may need a legal right of use for at least two IPs for use of the target item, and in this case, licenses may need to be obtained for each. In this case, depending on the characteristics of the target item of the potential licensee, the importance of each of such elements or combination technologies of such a target item may be relative to each other. Accordingly, in one embodiment, a license fee limit may be determined in a manner dependent on the relative importance of each element or combination technologies in the target item. Further, the license fee for each IP may be determined at least partially based on the thus determined license fee limit, for example, so as not to exceed the license fee limit.

Specifically, first, the relative importance of each element or combination technologies may be ranked by various methods. For example, the ranking of each element or combination technologies may be made based on at least one of the number of IP held by the owner of corresponding IP in the same technology theme, the number of citations of the corresponding IP, the presence/absence or number of papers related to the corresponding IP, or the presence/absence or number of preset licenses for the corresponding IP. The method of ranking may be various, and a rule-based method may be used, but is not limited thereto.

Further, once the ranking is made in this way, a license fee limit may be determined in proportion to the ranked order. Further, the license fee may be determined for each element or combination technologies according to the thus determined limit.

As described above, according to one embodiment, a potential licensee may easily search IP necessary for research on, development, production, sale, or rental of a target item based on a query. In addition, the potential licensee may easily make a transfer or license contract for such searched IP with an owner of the IP even without help of professional personnel such as a lawyer or a patent attorney.

In addition, an IP owner may induce more people to use his or her IP, and in some cases, may also obtain additional profit by allowing a third party to use IP that the IP owner himself or herself is not using or does not plan to use. Accordingly, more people may be induced to have interest in IP and to attempt right acquisition, and the market scale of IP transaction may grow quantitatively or qualitatively.

In addition, a result searched by the potential licensee may be used as a business item having unique value, and in that various people may be involved for realization of such a business item, there is an effect of job creation.

Furthermore, in a transaction process of IP, an IP owner may secure information on the target item of the potential licensee, and in some cases, the IP owner or a third party may have an intention to invest in such a target item. That is, from a standpoint of the potential licensee, not only may a legal right of use for IP be secured, but also an investor for his or her target item may be recruited through a server according to one embodiment.

Meanwhile, the methods according to the various embodiments described above may be implemented in the form of a computer program stored in a computer-readable recording medium programmed to perform each step of such methods, and may also be implemented in the form of a computer-readable recording medium storing a computer program programmed to perform each step of such methods.

The above description is merely exemplary description of the technical teachings of the present invention, and those skilled in the art to which the present invention pertains may make various modifications and variations without departing from the original characteristics of the present invention. Accordingly, the embodiments disclosed in the present invention are not intended to limit the technical teachings of the present invention but to describe it, and the scope of the technical teachings of the present invention is not limited by such embodiments. The protection scope of the present invention should be interpreted based on the following claims and it should be appreciated that all technical teachings included within a range equivalent thereto are included in the protection scope of the present invention.

## Claims

1. A method for searching target IP for a target item, performed by a computer device, comprising:
acquiring a query designating the target item; and
searching a plurality of target IPs for use in at least one selected from the group consisting of research, development and production of the target item, based on the query,
wherein the plurality of target IPs include IPs for each of at least two elements among elements of the target item and IPs for combination technologies of the at least two elements for use in performance, operation, production or utilization of the target item.

2. The method for searching the target IP for the target item of claim 1, wherein the searching comprises:
searching the elements of the target item based on the query;
searching the target IP in which at least one of the searched elements is described;
searching the combination technologies by using a technology for combining the elements as the query; and
searching the target IP in which the searched combination technologies are described.

3. The method for searching the target IP for the target item of claim 1, wherein, in the searching, a patent in which at least one of the elements of the target item and the combination technologies of the elements is described in a patent claim is searched as the target IP.

4. The method for searching the target IP for the target item of claim 1, further comprising:
selecting a patent in which an additional element not included in the target item is described in a patent claim, or a combination technology different from the combination technologies of the elements is described,
wherein in the searching, the plurality of target IPs is controlled to be exclusive of the selected patent.

5. The method for searching the target IP for the target item of claim 4, wherein at least one of the additional element and the different combination technology is determined based on input from a potential licensee of the target IP.

6. The method for searching the target IP for the target item of claim 1, further comprising:
selecting a patent in which an additional element not included in the target item is described in a patent claim, or a combination technology different from the combination technologies of the elements is described;
presenting the selected patent as reference technology in research on or development of the target item to a potential licensee of the target IP; and
when a search request for the reference technology is received from the potential licensee, searching IP including at least one of the additional element and the different combination technology.

7. The method for searching the target IP for the target item of claim 1, further comprising:
in the searching, acquiring information on IP searchable as the target IP and IP to be excluded in search results,
wherein the plurality of target IPs are searched among the IPs information searchable as the target IP.

8. The method for searching the target IP for the target item of claim 1, wherein the query includes a wording designating performance improvement of the target item, and
wherein in the searching, a patent including at least one of the wording and semantic synonyms of the wording in a section in which an effect of invention is described is searched as the target IP.

9. The method for searching the target IP for the target item of claim 1, wherein the query includes a quantitative index wording indicating performance of the target item, and
wherein in the searching, a patent in which the performance of the target item extracted from a section in which an effect of invention is described satisfies a range limited by the quantitative index wording is searched as the target IP.

10. The method for searching the target IP for the target item of claim 9, wherein,
in the searching,
even when the performance of the target item extracted from the section in which the effect of invention is described deviates from the range limited by the quantitative index wording,
a patent in which the performance of the target item is described in a detailed description of invention as not being limitedly interpreted as described in the detailed description of invention or the effect of invention is searched as the target IP.

11. The method for searching the target IP for the target item of claim 1, wherein the target IP comprises at least one selected from the group consisting of a registered patent, a published patent, a registered utility model, a published utility model, a registered trademark, a published trademark, a registered design, a published design, a copyright, software and know-how.

12. The method for searching the target IP for the target item of claim 1, wherein, in the searching, a language model that receives the query searches for and provides the plurality of target IPs.

13. The method for searching the target IP for the target item of claim 12, wherein the language model is trained by fine-tuning a pre-trained model based on at least one selected from the group consisting of a paper, a published patent document and a published utility model document.

14. The method for searching the target IP for the target item of claim 13, wherein, in the fine-tuning, reinforcement learning by human feedback (RLHF) is performed.

15. The method for searching the target IP for the target item of claim 14, wherein, in the reinforcement learning by human feedback, a training process using a dialogue set generated by humans and a training process using a ranking selected by humans with respect to a plurality of outputs generated by the language model are performed.

16. The method for searching the target IP for the target item of claim 1, further comprising:
concluding a contract in which agreed matters between an owner of the target IP and a potential licensee are reflected, while setting a legal right of use of the searched target IP as a subject matter of the contract.

17. The method for searching the target IP for the target item of claim 16, wherein the contract comprises a transfer contract or a license contract for the searched target IP.

18. The method for searching the target IP for the target item of claim 16, wherein the agreed matters include at least one selected from the group consisting of a payment amount for assignment, a license fee, a payment method of license fee, a condition of termination of license, a license territory, a license field, a technical assistance and patent claim numbers in which the legal right of use is to be granted.

19. The method for searching the target IP for the target item of claim 16, wherein the agreed matters are input by the owner of the target IP.

20. The method for searching the target IP for the target item of claim 18, wherein, based on statistics or artificial intelligence, at least one of a maximum amount, a minimum amount and an average amount of the payment amount for assignment or the license fee is provided as reference information to the owner of the target IP.

21. The method for searching the target IP for the target item of claim 16, further comprising:
recommending, by a pre-trained mediator recommendation model, a mediator that mediates requirement matters between the owner of the target IP and the potential licensee, and
wherein the agreed matters are mediated by the mediator recommended by the mediator recommendation model.

22. The method for searching the target IP for the target item of claim 21, wherein the mediator recommendation model recommends the mediator based on at least one selected from the group consisting of a field of expertise of the mediator, a mediation success rate of the mediator and an agreement tendency of each of the owner of the target IP and the potential licensee.

23. The method for searching the target IP for the target item of claim 16, further comprising:
recommending, by a pre-trained mediation plan recommendation model, a mediation plan for mediating requirement matters between the owner of the target IP and the potential licensee, and
wherein the agreed matters comprise the mediation plan recommended by the mediation plan recommendation model.

24. The method for searching the target IP for the target item of claim 1, further comprising:
acquiring request matters from each of an owner of the target IP and a potential licensee; and
generating a term sheet in which the acquired request matters are collectively described and providing the term sheet to each of the owner of the target IP and the potential licensee.

25. The method for searching the target IP for the target item of claim 24, wherein the term sheet indicates in a distinguishable manner, among the acquired request matters, matters on which mutual opinions have been agreed upon and matters on which mutual opinions have not been agreed upon.

26. The method for searching the target IP for the target item of claim 16, further comprising:
reflecting contents included in the concluded contract on a predetermined blockchain.

27. The method for searching the target IP for the target item of claim 1, further comprising:
acquiring relative importance information for each of elements of the target item and the combination technologies; and
determining a license fee limit for each of the elements and the combination technologies in a manner dependent on the acquired relative importance, and
wherein the plurality of target IPs are determined based at least partially on the determined license fee limit and a license fee predetermined by an owner of the IP.

28. The method for searching the target IP for the target item of claim 1, wherein, in the searching, two or more candidate IPs are searched for each of the elements of the target item and the combination technologies,
wherein the method further comprises:
ranking the two or more candidate IPs searched for each of the elements of the target item and the combination technologies, and
wherein the ranking for the candidate IPs is made based on at least one selected from the group consisting of the number of IP held by an owner of corresponding IP in the same technology theme, the number of citations of the corresponding IP, the presence/absence or number of scientific publication papers related to the corresponding IP and the presence/absence or number of preset licenses for the corresponding IP.

29. The method for searching the target IP for the target item of claim 1, further comprising:
generating a business package file including information on the elements of the target item, the combination technologies of the elements, IP for the elements of the target item, and IP for the combination technologies of the elements; and
controlling to allow the generated business package file to be tradable in a business item trading platform.

30. The method for searching the target IP for the target item of claim 29, further comprising:
reflecting the business package file on a predetermined blockchain.

31. The method for searching the target IP for the target item of claim 30, wherein the blockchain is a private blockchain accessible only to a subject who has purchased the business package file.

32. The method for searching the target IP for the target item of claim 30, wherein the blockchain comprises contract contents for the trade of the business package file.

33. The method for searching the target IP for the target item of claim 16, wherein the concluding of the contract comprises at least one of the following steps:
receiving an electronic signature from each of the owner of the target IP and the potential licensee; and
receiving notarization for the concluded contract.

34. A computer program stored in a computer-readable recording medium, the computer program being configured to perform each step included in any one of claims 1 to 33.

35. A computer-readable recording medium storing a computer program, the computer program being configured to perform each step included in any one of claims 1 to 33.

36. A computer device, comprising:
a memory storing at least one instruction; and
a processor,
wherein, as the at least one instruction is executed by the processor, a query designating a target item is acquired,
based on the query, a plurality of target IPs for use in at least one selected from the group consisting of research, development and production of the target item are searched, and
the plurality of target IPs comprises IPs for each of at least two elements among elements of the target item and IPs for combination technologies of the at least two elements for a use in performance, operation, production or utilization of the target item.

37. The computer device of claim 36, wherein, in the searching of the plurality of target IPs, a patent in which at least one of the elements of the target item and the combination technologies of the elements is described in a patent claim is searched as the target IP.

38. The computer device of claim 36, wherein, as the at least one instruction is executed by the processor,
a patent in which an additional element not included in the target item is described in a patent claim or a combination technology different from the combination technologies of the elements is described is selected, and
in the searching of the plurality of target IPs, the plurality of target IPs is controlled to be exclusive of the selected patent.

39. The computer device of claim 38, wherein at least one of the additional element and the different combination technology is determined based on input from a potential licensee of the target IP.

40. The computer device of claim 36, wherein a patent in which an additional element not included in the target item is described in a patent claim, or a combination technology different from the combination technologies of the elements is described, is selected,
the selected patent is presented, as a reference technology in research on or development of the target item, to a potential licensee of the target IP, and
when a search request for the reference technology is received from the potential licensee, an IP including at least one of the additional element and the different combination technology, is searched.

41. The computer device of claim 36, wherein, as the at least one instruction is executed by the processor,
information on IP searchable as the target IP and IP to be excluded in search results is acquired, and
the plurality of target IPs is searched from among the searchable IP while not being searched from among the IP to be excluded in the search results.

42. The computer device of claim 36, wherein the query includes a wording designating performance improvement of the target item, and
wherein in the searching, a patent in which at least one of the wording and semantic synonyms of the wording is included in a section in which an effect of invention is described is searched as the target IP.

43. The computer device of claim 36, wherein the query includes a quantitative index wording indicating performance of the target item, and
wherein in the searching, a patent in which the performance of the target item extracted from a section in which an effect of invention is described satisfies a range limited by the quantitative index wording is searched as the target IP.

44. The computer device of claim 43, wherein in the searching,
even when the performance of the target item extracted from the section in which the effect of invention is described deviates from the range limited by the quantitative index wording,
a patent in which the performance of the target item is described in a detailed description of invention as not being limitedly interpreted as described in the detailed description of invention or the effect of invention is searched as the target IP.

45. The computer device of claim 36, wherein the target IP comprises at least one selected from the group consisting of a registered patent, a published patent, a registered utility model, a published utility model, a registered trademark, a published trademark, a registered design, a published design, a copyright, software and know-how.

46. The computer device of claim 36, wherein, in the searching, a language model receiving the query searches for and provides the plurality of target IPs.

47. The computer device of claim 46, wherein the language model is trained by fine-tuning a pre-trained model based on at least one selected from the group consisting of a paper, a published patent document and a published utility model document.

48. The computer device of claim 47, wherein, in the fine-tuning, reinforcement learning by human feedback (RLHF) is performed.

49. The computer device of claim 48, wherein, in the reinforcement learning by human feedback, a training process using a dialogue set generated by humans and a training process using a ranking selected by humans with respect to a plurality of outputs generated by the language model are performed.

50. The computer device of claim 36, wherein in the searching,
the elements of the target item are searched based on the query,
a target IP in which at least one of the searched elements is described is searched,
the combination technologies are searched by using a technology for combining the elements as the query, and
a target IP in which the searched combination technologies are described is searched.

51. The computer device of claim 36, wherein when the at least one instruction is executed by the processor,
a contract in which agreed matters between an owner of the target IP and a potential licensee are reflected while setting a legal right of use of the searched target IP as a subject matter of the contract, is concluded.

52. The computer device of claim 51, wherein the contract comprises a transfer contract or a license contract for the searched target IP.

53. The computer device of claim 51, wherein the agreed matters include at least one selected from the group consisting of a payment amount for assignment, a license fee, a payment method of license fee, a condition of termination of license, a license territory, a license field, a technical assistance and patent claim numbers in which the legal right of use is to be granted.

54. The computer device of claim 51, wherein the agreed matters are input by the owner of the target IP.

55. The computer device of claim 53, wherein, based on statistics or artificial intelligence, at least one of a maximum amount, a minimum amount and an average amount of the payment amount for assignment or the license fee is provided as reference information to the owner of the target IP.

56. The computer device of claim 51, wherein as the at least one instruction is executed by the processor,
a mediator that mediates requirement matters between the owner of the target IP and the potential licensee is recommended by a pre-trained mediator recommendation model, and
the agreed matters are mediated by the mediator recommended by the mediator recommendation model.

57. The computer device of claim 56, wherein the mediator recommendation model recommends the mediator based on at least one selected from the group consisting of a field of expertise of the mediator, a mediation success rate of the mediator and an agreement tendency of each of the owner of the target IP and the potential licensee.

58. The computer device of claim 51, wherein as the at least one instruction is executed by the processor,
a mediation plan for mediating requirement matters between the owner of the target IP and the potential licensee is recommended by a pre-trained mediation plan recommendation model, and
the agreed matters include the mediation plan recommended by the mediation plan recommendation model.

59. The computer device of claim 36, wherein request matters are acquired from each of the owner of the target IP and the potential licensee, and
wherein a term sheet in which the acquired request matters are collectively described is generated and provided to each of the owner of the target IP and the potential licensee.

60. The computer device of claim 59, wherein, the term sheet indicates in a distinguishable manner, among the acquired request matters, matters on which mutual opinions have been agreed upon and matters on which mutual opinions have not been agreed upon.

61. The computer device of claim 51, wherein contents included in the concluded contract are reflected on a predetermined blockchain.

62. The computer device of claim 36, wherein as the at least one instruction is executed by the processor,
relative importance information for each of elements of the target item and the combination technologies is acquired,
a license fee limit for each of the elements and the combination technologies is determined in a manner dependent on the acquired relative importance, and
the plurality of target IPs are determined at least partially based on the determined license fee limit and a license fee predetermined by the owner of the IP.

63. The computer device of claim 36, wherein in the searching,
two or more candidate IPs are searched for each of the elements of the target item and the combination technologies,
wherein as the at least one instruction is executed by the processor,
a ranking is made for the two or more candidate IPs searched for each of the elements of the target item and the combination technologies, and
the ranking for the candidate IPs is made based on at least one selected from the group consisting of the number of IPs held by an owner of the corresponding IP in the same technology theme, the number of citations of the corresponding IP, the presence/absence or number of scientific publication papers related to the corresponding IP and the presence/absence or number of preset licenses for the corresponding IP.

64. The computer device of claim 36, wherein a business package file including information on the elements of the target item, the combination technologies of the elements, IP for the elements of the target item, and IP for the combination technologies of the elements, is generated, and
wherein the generated business package file is controlled to be tradable on a business item trading platform.

65. The computer device of claim 64, wherein the business package file is reflected on a predetermined blockchain.

66. The computer device of claim 65, wherein the blockchain is a private blockchain accessible only to a subject who has purchased the business package file.

67. The computer device of claim 65, wherein, in the blockchain comprises contract contents for the trade of the business package file.

68. The computer device of claim 51, wherein the concluding of the contract comprises at least one the following steps of:
receiving an electronic signature from each of the owner of the target IP and the potential licensee; and
receiving notarization for the concluded contract.
